(19)

Europäisches
Patentamt

European
Patent Office

Office européen
des brevets

(11) **EP 4 265 801 A1**

(12) **EUROPEAN PATENT APPLICATION**
published in accordance with Art. 153(4) EPC

(43) Date of publication:
**25.10.2023 Bulletin 2023/43**

(21) Application number: **21907169.3**

(22) Date of filing: **17.12.2021**

(51) International Patent Classification (IPC):
*C22C 38/60* (2006.01)     *C22C 38/02* (2006.01)
*C22C 38/04* (2006.01)     *C22C 38/14* (2006.01)
*C21D 9/52* (2006.01)     *C21D 8/06* (2006.01)

(52) Cooperative Patent Classification (CPC):
**C21D 8/06; C21D 9/52; C22C 38/02; C22C 38/04;**
**C22C 38/14; C22C 38/60**

(86) International application number:
**PCT/KR2021/019314**

(87) International publication number:
**WO 2022/131865 (23.06.2022 Gazette 2022/25)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.12.2020  KR 20200178273**

(71) Applicant: POSCO Co., Ltd
**Pohang-si, Gyeongsangbuk-do 37859 (KR)**

(72) Inventors:
• LEE, Byounggab
  **Pohang-si Gyeongsangbuk-do 37660 (KR)**
• PARK, Ingyu
  **Pohang-si Gyeongsangbuk-do 37639 (KR)**
• KIM, Cheolki
  **Seoul 06276 (KR)**
• CHOI, Sangwoo
  **Pohang-si Gyeongsangbuk-do 37664 (KR)**
• RHEE, Kiho
  **Incheon 21685 (KR)**

(74) Representative: **Nederlandsch Octrooibureau**
**P.O. Box 29720**
**2502 LS The Hague (NL)**

(54) **WIRE ROD FOR GRAPHITIZATION HEAT TREATMENT, AND GRAPHITE STEEL**

(57)     Disclosed in the present specification are: a wire rod for graphitization heat treatment, the wire rod having fine graphite grains uniformly distributed in a matrix during graphitization heat treatment while significantly reducing graphitization heat treatment time; and a graphite steel. According to one embodiment of the disclosed wire rod for graphitization heat treatment, the wire rod comprises, by wt%, 0.65-0.85% of C, 2.00-3.00% of Si, 0.15-0.35% of Mn, 0.05 -0.1% of Ti, 0.01% or less of N, 0.005% or less of B, 0.05% or less of P, 0.05% or less of S, and the balance of Fe and inevitable impurities, wherein the value of the following formula (1) satisfies -1 to 1, and the microstructure may comprise, by area fraction, 40% or less of ferrite, a total of 5% or less of bainite and martensite and the remainder being pearlite. Formula (1): $100*([Mn]-0.25)2 - (100*[N])2$. In formula (1), [Mn] and [N] mean the wt% of each alloy element.

EP 4 265 801 A1

**Description**

[Technical Field]

The disclosure relates to graphite steel applicable in various industrial fields such as machine parts, and more particularly, to a wire rod for graphitization heat treatment and graphite steel having a short graphitization heat treatment time and good cutability.

[Background Art]

As a material for e.g., small machine parts requiring cutability, free-cutting steel to which cutability imparting elements such as Pb, Bi, and S are added has been used. Pb-added free-cutting steel, which is the most representative free-cutting steel, emits harmful substances such as toxic fumes while being cut, which is very harmful to the human body and is very unfavorable for recycling of steel.

To replace the Pb free-cutting steel having such an issue, free-cutting steels with S, Bi, Te, Sn, etc., added thereto have been suggested. S free-cutting steel with S added thereto is no match for the Pb free-cutting steel in terms of cutability. Bi free-cutting steel with Bi added thereto is easily cracked while being manufactured and thus difficult to be produced. Free-cutting steel to which Te and Sn are added thereto also has a problem of causing cracks during hot rolling.

Graphite steel as a steel material that replaces Pb free-cutting steel is a steel in which graphite grains exist inside a ferrite matrix or a ferrite and pearlite matrix. Graphite steel has excellent cutability because the graphite grains inside the matrix structure act as crack sources to serve as chip breakers and simultaneously reduce friction with a tool.

However, graphite steel has a disadvantage of requiring a long period of extra graphitization heat treatment to decompose metastable cementite to precipitate graphite grains. This not only reduces productivity and increases cost, but also causes decarburization during the long period of graphitization heat treatment process, which adversely affects the performance of the final product.

Furthermore, even if graphite grains are precipitated through graphitization heat treatment, when the graphite grains are unevenly distributed in an irregular form, chip disposability or surface roughness becomes worse due to non-uniform physical properties during cutting, and the lifespan of the tool is also shortened.

(Prior Art Literature)

(Patent literature 1) Korean Patent Publication No. 1995-0006006 (published on March 20, 1995)

[Disclosure]

[Technical Problem]

To solve the above problems, the disclosure provides a graphitization heat treatment wire rod and graphite steel in which fine graphite grains are uniformly distributed in a matrix during graphitization heat treatment while significantly reducing the graphitization heat treatment time.

[Technical Solution]

According to an embodiment of the disclosure, a wire rod for graphitization heat treatment includes, in percent by weight (wt%), 0.65 to 0.85% of C, 2.00 to 3.00% of Si, 0.15 to 0.35% ofMn, 0.002 to 0.1% of Ti, 0.01% or less of N, 0.0005% or less of B, 0.05% or less of P, 0.05% or less of S, and the remainder having Fe and unavoidable impurities, wherein the value of formula (1) below satisfies -1 or more and 1 or less, and a microstructure includes, in area fraction, 40% or less of ferrite, a total of 5% or less of the bainite and martensite, and the remainder being pearlite.

$$\text{Formula (1): } 100*([Mn]-0.25)^2 - (100*[N])^2$$

In formula (1), [Mn] and [N] each refer to wt% of the alloy element.

The value of formula (2) below may satisfy 6 or less:

$$\text{Formula (2): } 100*[Ti] + 10000*[B]$$

In formula (2), [Ti] and [B] each refer to wt% of the alloy element.

According to an embodiment of the disclosure, a graphite steel includes, in wt%, 0.65 to 0.85% of C, 2.0 to 3.0% of Si, 0.15 to 0.35% of Mn, 0.002 to 0.1% of Ti, 0.01% or less of N, 0.0005% or less of B, 0.05% or less of P, 0.05% or less of S, and the remainder having Fe and unavoidable impurities, wherein the value of formula (1) below satisfies -1 or more and 1 or less, and the microstructure includes, in area fraction, 80% or more of ferrite and the remainder being graphite grains.

$$\text{Formula (1): } 100*([Mn]-0.25)^2 - (100*[N])^2$$

In formula (1), [Mn] and [N] each refer to wt% of the alloy element.

The value of formula (2) below may satisfy 6 or less:

$$\text{Formula (2): } 100*[Ti] + 10000*[B]$$

In formula (2), [Ti] and [B] each refer to wt% of the alloy element.

The graphite steel may have a tensile strength of 550 MPa or less.

[Advantageous Effects]

Graphite steel according to the disclosure may be applied as a material for parts of precision machinery such as automobiles, home appliances/electronic devices, and industrial devices. In particular, the disclosure may drastically reduce the manufacturing cost of graphite steel by significantly shortening the graphitization heat treatment time through alloy composition control, and ensure excellent cutability by uniformly distributing fine graphite grains in the matrix structure.

[Best Mode]

In an example of the disclosure, a wire rod for graphitization heat treatment includes, in percent by weight (wt%), 0.65 to 0.85% of C, 2.00 to 3.00% of Si, 0.15 to 0.35% of Mn, 0.002 to 0.1% of Ti, 0.01% or less of N, 0.0005% or less of B, 0.05% or less of P, 0.05% or less of S, and the remainder having Fe and unavoidable impurities, wherein the value of Formula (1) below satisfies -1 or more and 1 or less, and a microstructure includes, in area fraction, 40% or less of ferrite, a total of 5% or less of bainite and martensite, and the remainder being pearlite.

$$\text{Formula (1): } 100*([Mn]-0.25)^2 - (100*[N])^2$$

In formula (1), [Mn] and [N] each refer to wt% of the alloy element.

[Modes of the Invention]

Embodiments of the disclosure will now be described. The embodiments of the disclosure, however, may be modified into many different forms and should not be construed as being limited to the embodiments set forth herein. The embodiments of the disclosure are provided to fully convey the idea provided in the disclosure to scope of the invention to those of ordinary skill n the art.

Terms as herein used are just for illustration. For example, the singular expressions include plural expressions unless the context clearly dictates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein have the same meaning as commonly understood by those of ordinary skill in the art to which the disclosure belongs. Furthermore, unless otherwise clearly defined, a specific term should not be construed as having overly ideal or formal meaning. It is to be understood that the singular expression include plural expressions unless the context clearly dictates otherwise.

Throughout the specification, the word 'about', 'substantially' or the like, is used to indicate that a numerical value used with the word belongs to a range around the numerical value, to prevent an unscrupulous pirate from unduly making an advantage of a description in which the absolute numerical value is mentioned.

Graphite grains precipitated in the steel matrix improve cutability. Specifically, during cutting, graphite grains act as a solid lubricant to suppress wear of a cutting tool, act as crack initiation points by stress concentration, reducing cutting friction, and have the cuttings short-segmented to improve cutability.

However, for graphitization, heat treatment for graphitizing cementite in pearlite, which is an initial rolled structure, is required. To precipitate graphite grains, a long period of graphitization heat treatment is required, and such a long period of heat treatment not only causes an increase in cost but also causes decarburization during the heat treatment, thereby having an adverse effect on the performance of the final part.

In the disclosure, a large amount of C and Si are added first to improve cutability and shorten the long period of graphitization heat treatment. As the content of C increases, more graphite grains are formed after the graphitization heat treatment, thereby having better cutability. Si destabilizes the cementite to promote decomposition of the cementite, and as a result, graphitization heat treatment may be shortened. Among them, when Si is overly added, the cutting tool may be worn down and the level of steelmaking difficulty increases, and in the traditional medium and high-C based graphite steel, a small amount of C is added to secure a cold forging property. On the other hand, in the disclosure, 2.0wt% or more of Si is added up to further promote graphitization.

Furthermore, in the disclosure, TiN nitrides in particular is mainly used among AlN, BN, and TiN nitrides that act as a nucleation site of graphite grains. As BN and A1N have a low precipitation temperature, they are precipitated non-uniformly while being concentrated across grain boundaries after austenite is formed. Non-uniformly precipitated BN and AlN act as nuclei for generating the graphite grains during graphitization heat treatment, and is thus likely to cause non-uniform distribution of the graphite grains. On the other hand, since TiN has a higher precipitation temperature than AlN or BN, and is crystallized before completion of austenite formation, it is uniformly distributed across austenite grain boundaries and within grains. In other words, TiN is uniformly distributed in the microstructure as compared to BN and AlN, and as a result, graphite grains formed with TiN as a nucleation site are uniformly distributed in the microstructure, and thus further promote graphitization as compared to BN and AlN with which graphite grains grow lopsidedly. In addition, uniformly distributed graphite grains may improve cutability such as chip disposability.

In the disclosure, the graphite steel is prepared by performing graphitization heat treatment on the wire rod for graphitization heat treatment. In an embodiment of the disclosure, a wire rod for graphitization heat treatment includes, in wt%, 0.65 to 0.85% of C, 2.00 to 3.00% of Si, 0.15 to 0.35% of Mn, 0.002 to 0.1% of Ti, 0.01% or less of N, 0.0005% or less of B, 0.05% or less of P, 0.05% or less of S, and the remainder being Fe and unavoidable impurities.

The reason for limiting the composition of the wire rod for graphitization heat treatment will now be described in detail. The reason for limiting alloy composition of graphite steel is the same as that of the wire rod for graphitization heat treatment, so the description will be omitted.

The content of C is 0.65 to 0.85wt%.

C is a component element constituting graphite grains, which is a cutting factor, and more graphite grains are formed as the C content increases. Furthermore, the more C is added, the higher the C activity, resulting in promotion of cementite decomposition, thereby shortening the graphitization heat treatment. When the C content is less than 0.65wt%, the C activity declines and cutability is degraded. On the other hand, if the C content exceeds 0.85wt%, the C activity increasing effect is saturated and the toughness of the steel is lowered by the excessively formed graphite grains, so that there is a risk of breakage occurring when the graphite steel undergoes wire drawing to produce cold drawn bar (CD-bar) later on. Accordingly, in the disclosure, the C content is controlled to be 0.65 to 0.85wt%.

The content of Si is 2.00 to 3.00wt%.

Si is positively added because it is a component required as a deoxidizer in manufacturing molten steel and a graphitization promoting element to precipitate the carbon as graphite by unstabilizing cementite in steel. When the Si content is less than 2.00wt%, the graphitization rate is likely to rapidly slow down. On the other hand, when the Si content exceeds 3.00wt%, it would likely slow down the graphitization promoting effect and cause brittleness due to an increase of non-metallic inclusions and decarburization symptoms during hot rolling. Accordingly, in the disclosure, the Si content is controlled to be 2.00 to 3.00wt%.

The content of Mn is 0.15 to 0.35wt%.

Mn is positively added because it improves strength and impact properties of steel and contributes to cutability enhancement by combining with S in steel to form MnS inclusions. In addition, when the Mn content is too small, the graphitization rate is inhibited by S that has not been involved in formation of MnS and it is likely to cause brittleness of the material. Taking this into account, 0.15wt% or more of Mn is added in the disclosure. However, if the Mn content is excessive, the strength and hardness of the steel may be excessively increased, likely causing the wear depth of the tool to be lowered. Considering this, the Mn content is controlled to be 0.35wt% or less.

The content of Ti is 0.002 to 0.1wt% or less.

Like B, Al, etc., Ti forms a nitride, TiN to lower the soluble nitrogen content that inhibits graphitization, and the TiN formed acts as a nucleation site of graphite to shorten the graphitization time. As BN and AlN that act as nucleation sites of graphite, have a low precipitation temperature, they are non-uniformly precipitated by being concentrated across the grain boundaries after austenite is formed. However, since TiN has a higher precipitation temperature than AlN or BN and crystallized before austenite formation is completed, TiN is uniformly distributed across austenite grain boundaries and within grains. In other words, TiN is uniformly distributed in the microstructure as compared to BN and AlN, and as a result, graphite grains formed with TiN as a nucleation site are uniformly distributed in the microstructure, further promoting graphitization as compared to BN and AlN with which graphite grains grow lopsidedly, and improving cutability of the graphite steel. Taking this into account, 0.002wt% or more of Ti is added in the disclosure. On the other hand, if the Ti content is excessive, it saturates the shortening effect of the graphitization heat treatment due to TiN, and rather likely deteriorates graphitization by forming coarse carbonitrides. Considering this, the Ti content is controlled to be 0. 1wt% or less in the disclosure.

The content of N is 0.01wt% or less.

N combines with Ti, B, and Al to produce nitrides such as TiN, BN, and AlN. As BN and AlN have a low precipitation temperature, they are precipitated non-uniformly while being concentrated mainly across austenite grain boundaries. Non-uniformly precipitated BN and AlN act as nuclei for generating the graphite grains during graphitization heat treatment, and is thus likely to cause non-uniform distribution of the graphite grains. Hence, it is necessary to properly control the N content to usually precipitate TiN and also suppress formation of BN and AlN as much as possible. Furthermore, when the N content is excessive, and thus cannot be combined with nitride-forming elements and exists in steel as soluble nitrogen, it stabilizes cementite and inhibits gratification. Considering this, the N content is controlled to be 0.01wt% or less in the disclosure.

The content of B is 0.0005wt% or less.

B combines with N to form BN, and the BN acts as a nucleus for generating graphite grains during graphitization heat treatment. However, as described above, BN is non-uniformly precipitated while being concentrated across the grain boundaries after austenite is formed. As a result, since graphite grains formed with BN as a nucleation site are also non-uniformly distributed, cutability is likely to deteriorate. Therefore, it is preferable to manage the upper limit of B to 0.0005wt% to prevent non-uniform distribution of graphite grains.

The content of P is 0.05wt% or less.

P is an impurity unavoidably contained. P weakens grain boundaries in steel and helps to improve cutability. However, P increases hardness of ferrite by a significant solid solution strengthening effect, reduces toughness and delayed fracture resistance of steel, and promotes occurrence of surface defects. Hence, the P content is preferably managed to be as low as possible. In the disclosure, the upper limit of P is managed to be 0.05wt%.

The content of S is 0.05wt% or less.

S is an impurity unavoidably contained. S forms MnS and has an effect of enhancing cutability. However, when S is present alone in the steel, S not only significantly inhibits the graphitization of C but also segregates across grain boundaries to reduce toughness and form low melting point emulsions to inhibit hot rolling properties. In addition, MnS has an effect of enhancing cutability, but mechanical anisotropy would likely appear due to the MnS stretched after rolling. Hence, the S content is preferably managed to be as low as possible. In the disclosure, the upper limit of S is managed to be 0.05wt%.

The remaining component is iron (Fe) in the disclosure. This may not be excluded because unintended impurities may be inevitably mixed from raw materials or surroundings in the normal manufacturing process. These impurities may be known to anyone skilled in the ordinary manufacturing process, so not all of them are specifically mentioned in this specification.

The wire rod for graphitization heat treatment according to an embodiment of the disclosure may satisfy the aforementioned alloy composition and also satisfy the value of formula (1) below ranging from -1 to 1.

$$\text{Formula (1): } 100*([Mn]-0.25)^2 - (100*[N])^2$$

In formula (1), [Mn] and [N] each refer to wt% of the alloy element.

If the value of formula (1) is less than -1, the cutability is deteriorated or the graphitization heat treatment time is lengthened. On the other hand, when the value of the formula (1) exceeds 1, the strength and hardness of the steel increases, leading to poor cutability and a long graphitization heat treatment time.

Furthermore, the wire rod for graphitization heat treatment according to an embodiment of the disclosure may satisfy the aforementioned alloy composition and also satisfy the value of the following formula (2) being 6 or less.

$$\text{Formula (2): } 100*[Ti] + 10000*[B]$$

In formula (2), [Ti] and [B] each refer to wt% of the alloy element.

When the content of Ti and B increases and the value of the formula (2) exceeds 6, the size of the crystallized TiN increases, making it difficult to serve as a graphite grain generation nucleus and increasing the graphitization heat treatment time. Furthermore, BN generated along the grain boundary acts as a graphite grain generation nucleus, so that graphite grains are non-uniformly produced. As a result, cutability becomes poor.

A microstructure of the wire rod for graphitization heat treatment according to an embodiment of the disclosure may include, in area fraction, 40% or less of ferrite, a total of 5% or less of bainite and martensite, and the remainder being pearlite.

In the disclosure, graphite steel is prepared by having the wire rod for graphitization heat treatment undergo graphitization heat treatment, and the microstructure of the graphite steel preferably includes ferrite and the remainder being graphite. When pearlite remains, the hardness of the steel increases, leading to a tool wear problem during cutting and reducing cutability. In an embodiment, the microstructure of the graphite steel may include, in area fraction, 80% or more of ferrite and the remainder being graphite grains.

Furthermore, in an embodiment of the disclosure, the tensile strength of the graphite steel that was subjected to graphitization heat treatment may be 550 MPa or less.

According to the disclosure, it is possible to drastically reduce the graphitization heat treatment time. Graphite steel is prepared by performing graphitization heat treatment on the wire rod for graphitization heat treatment at 730 to 770 °C for 6 hours or less, in which case, the graphitization rate of the graphite steel may be 99% or more. The graphitization rate refers to a ratio of a carbon content present in the graphite state to a carbon content added to the steel, which is defined in the following formula (3), and when a graphitization rate is 99% or more, it means that almost all the added carbon is consumed to produce graphite. In formula (3), an amount of soluble carbon and fine carbides in ferrite are extremely small, so they are not considered. That the graphitization rate is 99% or more means that, in other words, undecomposed pearlite does not exist in the steel but the steel is composed of ferrite and the remainder being graphite grains.

$$\text{Formula (3): Graphitization rate (\%)} = (1 - \text{remainder being pearlite}$$

$$\text{carbon content} / \text{carbon content in steel}) \times 100$$

A method of manufacturing graphite steel according to the disclosure will now be described in detail.

The graphite steel of the disclosure as described above may be manufactured in various methods, which are not particularly limited, but the method of manufacturing graphite steel according to an embodiment of the disclosure may include steps of hot rolling a steel material satisfying the aforementioned alloy composition and performing graphitizing heat treatment at 730 to 770 °C for 6 hours or less.

The hot-rolling step may include casting an ingot that satisfies the alloy composition as described above, performing homogenization heat treatment at 1100 to 1300 °C for 5 to 10 hours and performing hot rolling at 1000 to 1100 °C. After hot rolling, air cooling may be performed at 8 °C/s or less to manufacture the wire rod for graphitization heat treatment.

Thereafter, graphite steel may be prepared by having the wire rod for graphitization heat treatment undergo graphitization heat treatment at 730 to 770 °C for 6 hours or less. According to the disclosure, it is necessary to graphitize the cementite in the steel by performing graphitization heat treatment on the wire rod for graphitization heat treatment. To speed up graphitization, it is preferable to perform heat treatment in a temperature region corresponding to a nose in an isothermal transformation curve. A preferred graphitization heat treatment temperature range is 730 to 770 °C, and cementite in all pearlite in the steel may be completely graphitized through isothermal heat treatment for 6 hours or less in this temperature range.

Graphite steel of the disclosure as described above may be applied as a material for parts of precision machinery such as automobiles, home appliances/electronic devices, and industrial devices. In particular, the disclosure may drastically reduce the manufacturing cost of graphite steel by significantly shortening the graphitization heat treatment time through alloy composition control, and ensure excellent cutability by uniformly distributing fine graphite grains in the matrix structure.

The graphite steel according to the disclosure may be manufactured into parts of precision machinery such as automobiles, home appliances/electronic devices, and industrial devices by wire drawing, cold forging, cutting, and the like. In some cases, quenching and tempering (Q/T) heat treatment may be performed to secure surface hardness after cutting.

The disclosure will now be described in more detail in the following embodiment of the disclosure. The following embodiment, however, is an illustrative example to describe the disclosure in more detail, and should not be construed as limiting the scope of the disclosure. The scope of the disclosure is defined by the claims and their equivalents.

{Embodiment}

An ingot having the composition as shown in Table 1 was cast and subjected to homogenization heat treatment at 1250 °C for 6 hours, followed by hot rolling and air cooling to prepare a wire rod for graphitization heat treatment. During the hot rolling, the finishing temperature was 1000 °C.

Formula (1) and formula (2) in Table 1 derive values by substituting the alloy composition content into the aforementioned formulas (1) and (2).

[Table 1]

| | alloy composition (wt%) | | | | | | | | | formula (1) | formula (2) |
|---|---|---|---|---|---|---|---|---|---|---|---|
| | C | Si | Mn | P | S | Al | Ti | B | N | | |
| Inventive example 1 | 0.72 | 2.47 | 0.22 | 0.019 | 0.006 | 0.002 | 0.007 | 0.0001 | 0.005 | -0.16 | 1.7 |
| Inventive example 2 | 0.84 | 2.04 | 0.27 | 0.007 | 0.007 | 0.001 | 0.011 | 0.0002 | 0.007 | -0.45 | 3.1 |
| Inventive example 3 | 0.80 | 2.94 | 0.19 | 0.031 | 0.009 | 0.000 | 0.017 | 0.0003 | 0.008 | -0.28 | 4.7 |
| Inventive example 4 | 0.76 | 2.49 | 0.20 | 0.011 | 0.005 | 0.001 | 0.010 | 0.0004 | 0.006 | -0.11 | 5.0 |
| Inventive example 5 | 0.81 | 2.38 | 0.18 | 0.031 | 0.002 | 0.000 | 0.017 | 0.0004 | 0.009 | -0.32 | 5.7 |
| Inventive example 6 | 0.68 | 2.61 | 0.19 | 0.002 | 0.012 | 0.002 | 0.007 | 0.0001 | 0.006 | 0.00 | 1.7 |
| Inventive example 7 | 0.78 | 2.27 | 0.16 | 0.027 | 0.027 | 0.004 | 0.006 | 0.0002 | 0.002 | 0.77 | 2.6 |
| Inventive example 8 | 0.66 | 2.03 | 0.24 | 0.020 | 0.027 | 0.005 | 0.009 | 0.0001 | 0.009 | -0.80 | 1.9 |
| Inventive example 9 | 0.75 | 2.93 | 0.33 | 0.006 | 0.029 | 0.000 | 0.017 | 0.0002 | 0.001 | 0.63 | 3.7 |
| Comparative example 1 | 0.32 | 2.18 | 0.16 | 0.010 | 0.030 | 0.004 | 0.016 | 0.0003 | 0.008 | 0.17 | 4.6 |
| Comparative example 2 | 0.78 | 3.47 | 0.17 | 0.023 | 0.030 | 0.000 | 0.010 | 0.0003 | 0.006 | 0.28 | 4.0 |
| Comparative example 3 | 0.77 | 2.25 | 0.38 | 0.019 | 0.021 | 0.004 | 0.008 | 0.0004 | 0.004 | 1.53 | 4.8 |
| Comparative example 4 | 0.80 | 2.95 | 0.12 | 0.020 | 0.013 | 0.003 | 0.017 | 0.0002 | 0.007 | 1.20 | 3.7 |
| Comparative example 5 | 0.77 | 2.25 | 0.27 | 0.019 | 0.021 | 0.004 | 0.008 | 0.0004 | 0.013 | -1.65 | 4.8 |
| Comparative example 6 | 0.76 | 2.90 | 0.28 | 0.022 | 0.009 | 0.002 | 0.040 | 0.0003 | 0.008 | -0.55 | 7.0 |
| Comparative example 7 | 0.83 | 2.19 | 0.24 | 0.020 | 0.004 | 0.001 | 0.003 | 0.0007 | 0.009 | -0.80 | 7.3 |

(continued)

| | alloy composition (wt%) | | | | | | | | | formula (1) | formula (2) |
|---|---|---|---|---|---|---|---|---|---|---|---|
| | C | Si | Mn | P | S | Al | Ti | B | N | | |
| Comparative example 8 | 0.73 | 2.92 | 0.34 | 0.013 | 0.006 | 0.002 | 0.015 | 0.0002 | 0.003 | 0.72 | 3.5 |
| Comparative example 9 | 0.83 | 2.58 | 0.18 | 0.034 | 0.022 | 0.005 | 0.007 | 0.0002 | 0.003 | 0.40 | 2.7 |

Afterward, the wire rod for graphitization heat treatment of table 1 was subjected to graphitization heat treatment at 750 °C for 4 hours to manufacture graphite steel. However, in comparative examples 8 and 9, the graphitization heat treatment was performed by setting the graphitization heat treatment temperature to 711 °C and 803 °C, respectively. The wire rod structure for graphitization heat treatment in table 2 refers to a microstructure of the wire rod for graphitization heat treatment before graphitization heat treatment. The graphite steel structure in table 2 refers to a microstructure of graphite steel after graphitization heat treatment.

The tool wear depth in Table 2 was obtained as degrees of wear by cutting 200 graphite steels of each inventive example and comparative example with a diameter of 25 mm until the diameter became 15 mm, and then comparing the tool edge depths before and after machining. In this case, the cutting rate was 100 mm/min, the feed rate was 0.1 mm/rev, and the cutting depth was 1.0 mm, and cutting process was performed using cutting oil.

[Table 2]

| | wire rod structure for graphitization heat treatment | graphitization heat treatment temperature (°C) | Graphite steel structure | tensile strength (MPa) | tool wear depth (mm) |
|---|---|---|---|---|---|
| Inventive example 1 | F+P | 750 | F+G | 483 | 109 |
| Inventive example 2 | P | 768 | F+G | 457 | 95 |
| Inventive example 3 | P | 737 | F+G | 525 | 105 |
| Inventive example 4 | P | 737 | F+G | 491 | 120 |
| Inventive example 5 | P | 754 | F+G | 478 | 132 |
| Inventive example 6 | F+P | 750 | F+G | 493 | 111 |
| Inventive example 7 | P | 758 | F+G | 466 | 117 |
| Inventive example 8 | F+P | 741 | F+G | 455 | 101 |
| Inventive example 9 | P | 751 | F+G | 534 | 127 |
| Comparative example 1 | F+P | 733 | F+G+P | 724 | 221 |
| Comparative example 2 | P | 757 | F+G+P | 911 | 210 |
| Comparative example 3 | P | 761 | F+G+P | 914 | 286 |

(continued)

|  | wire rod structure for graphitizati on heat treatment | graphitizatio n heat treatment temperature (°C) | Graphite steel structure | tensile strength (MPa) | tool wear depth (mm) |
|---|---|---|---|---|---|
| Comparative example 4 | P | 741 | F+G+P | 996 | 284 |
| Comparative example 5 | P | 739 | F+G+P | 992 | 204 |
| Comparative example 6 | P | 769 | F+G+P | 896 | 250 |
| Comparative example 7 | P | 732 | F+G+P | 857 | 236 |
| Comparative example 8 | P | 711 | F+G+P | 985 | 220 |
| Comparative example 9 | P | 803 | F+G+P | 860 | 265 |
| (F: ferrite, P: Pearlite, G: Graphite) | | | | | |

Referring to the results of tables 1 and 2, inventive examples 1 to 9 had no pearlite after graphitization heat treatment, so the graphitization rate was 99% or more only with a short period of graphitization heat treatment, which is 4 hours, and the tensile strength was 550 MPa or less, and the tool wear depth was 200 mm or less, which proved excellent cutability.

On the other hand, comparative examples 1 to 7 were subjected to graphitization heat treatment under the same graphitization heat treatment conditions as in the disclosure, but graphitization was not completed due to the remaining pearlite structure, tensile strength exceeded 550 MPa, and tool wear depth exceeded 200 mm, which proved poor cutability.

More specifically, in comparative example 1, graphitization was not completed due to low C content and low driving force for graphitization. In comparative example 2, the Si content was high, causing brittleness due to an increase in non-metallic inclusions and decarburization symptoms during hot rolling. In comparative example 3, graphitization was not completed because Mn inclusions were formed and remaining Mn inhibited graphitization. In comparative example 4, graphitization was not completed because Mn is insufficient to form MnS and the remaining S inhibited graphitization. In comparative example 5, graphitization was not completed because N content was high and the remaining N after nitrides such as TiN, AlN, and BN were formed inhibited graphitization. In comparative example 7, the B content was excessive and most of BN was precipitated across the grain boundary, thereby inhibiting graphitization.

In particular, in the case of comparative examples 3 to 5, the graphitization was not completed because the value range of formula (1) limited by the disclosure was not satisfied, and the cutability was poor.

Comparative examples 6 and 7 did not satisfy the value range of formula (2) limited by the disclosure, so the crystallized TiN size was too large to complete graphitization. In addition, BN produced along the grain boundary acted as a graphite grain generation nucleus, and graphite grains were non-uniformly generated. As a result, the cutability was poor.

Comparative examples 8 and 9 did not satisfy the graphitization heat treatment temperature limited by the disclosure. As a result, in comparative example 8 where the graphitization heat treatment temperature was too low, the pearlite was not completely graphitized during the graphitization heat treatment. On the other hand, in comparative example 9 where the graphitization heat treatment temperature was too high, phase transformation to austenite was done and pearlite was formed again during cooling.

Embodiments of the disclosure have thus far been described, but the disclosure is not limited thereto, and it will be obvious to those of ordinary skill in the art that various modifications and alterations can be made without deviating from the scope of the appended claims.

[Industrial Applicability]

According to the disclosure, a wire rod for graphitization heat treatment and graphite steel has industrial applicability because it may drastically reduce the manufacturing cost of graphite steel by significantly shortening the graphitization heat treatment time, and ensure excellent cutability by uniformly distributing fine graphite grains in the matrix structure.

**Claims**

1. A wire rod for graphatization heat treatment, the wire rod comprising:

   in percent by weight (wt%), 0.65 to 0.85% of C, 2.00 to 3.00% of Si, 0.15 to 0.35% of Mn, 0.002 to 0.1% of Ti, 0.01% or less of N, 0.0005% or less of B, 0.05% or less of P, 0.05% or less of S, and the remainder having Fe and unavoidable impurities,
   wherein a value of formula (1) below satisfies -1 or more and 1 or less, and
   wherein a microstructure comprises, in area fraction, 40% or less of ferrite, a total of 5% or less of bainite and martensite and the remainder being pearlite:

$$\text{Formula (1): } 100*([Mn]-0.25)^2 - (100*[N])^2$$

   (In formula (1), [Mn] and [N] each refer to wt% of the alloy element).

2. The wire rod of claim 1, wherein a value of formula (2) satisfies 6 or less:

$$\text{Formula (2): } 100*[Ti] + 10000*[B]$$

   (in formula (2), [Ti] and [B] each refer to wt% of the alloy element).

3. A graphite steel comprising:

   in percent by weight (wt%), 0.65 to 0.85% of C, 2.0 to 3.0% of Si, 0.15 to 0.35% of Mn, 0.002 to 0.1% of Ti, 0.01% or less of N, 0.0005% or less of B, 0.05% or less of P, 0.05% or less of S, and the remainder having Fe and unavoidable impurities,
   wherein a value of formula (1) below satisfies -1 or more and 1 or less, and
   wherein a microstructure comprises, in area fraction, 80% or more of ferrite and the remainder being graphite grains:

$$\text{Formula (1): } 100*([Mn]-0.25)^2 - (100*[N])^2$$

   (In formula (1), [Mn] and [N] each refer to wt% of the alloy element).

4. The graphite steel of claim 3, wherein a value of formula (2) satisfies 6 or less:

$$\text{Formula (2): } 100*[Ti] + 10000*[B]$$

   (in formula (2), [Ti] and [B] each refer to wt% of the alloy element).

5. The graphite steel of claim 3, wherein tensile strength is 550 MPa or less.

## INTERNATIONAL SEARCH REPORT

| International application No. |
|---|
| **PCT/KR2021/019314** |

### A. CLASSIFICATION OF SUBJECT MATTER

**C22C 38/60**(2006.01)i; **C22C 38/02**(2006.01)i; **C22C 38/04**(2006.01)i; **C22C 38/14**(2006.01)i; **C21D 9/52**(2006.01)i; **C21D 8/06**(2006.01)i

According to International Patent Classification (IPC) or to both national classification and IPC

### B. FIELDS SEARCHED

Minimum documentation searched (classification system followed by classification symbols)

C22C 38/60(2006.01); B21J 5/00(2006.01); C21D 8/06(2006.01); C21D 8/12(2006.01); C22C 38/00(2006.01); C22C 38/02(2006.01); C22C 38/04(2006.01); C22C 38/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 펄라이트(pearlite), 흑연(graphite), 페라이트(ferrite), 티타늄(Ti), 보론(B)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0003012 A (NIPPON STEEL CORPORATION) 08 January 2020 (2020-01-08)<br>See paragraph [0062] and claim 1. | 1-2 |
| A | | 3-5 |
| X | JP 07-188850 A (KAWASAKI STEEL CORP.) 25 July 1995 (1995-07-25)<br>See paragraph [0034] and claim 2. | 3-5 |
| X | JP 11-350067 A (TOA STEEL CO., LTD. et al.) 21 December 1999 (1999-12-21)<br>See paragraph [0062] and claims 1 and 4. | 3-5 |
| A | KR 10-2020-0045906 A (POSCO) 06 May 2020 (2020-05-06)<br>See paragraph [0054] and claim 1. | 1-5 |
| A | CN 109207840 A (BAOSHAN IRON & STEEL CO., LTD.) 15 January 2019 (2019-01-15)<br>See claim 1. | 1-5 |

☐ Further documents are listed in the continuation of Box C.       ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 April 2022** | **18 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/019314**

| Patent document cited in search report | | | Publication date (day/month/year) | Patent family member(s) | | | Publication date (day/month/year) |
|---|---|---|---|---|---|---|---|
| KR | 10-2020-0003012 | A | 08 January 2020 | CN | 110621799 | A | 27 December 2019 |
| | | | | CN | 110621799 | B | 31 August 2021 |
| | | | | JP | 6528920 | B2 | 12 June 2019 |
| | | | | JP | WO2018-212327 | A1 | 22 November 2018 |
| | | | | KR | 10-2303599 | B1 | 23 September 2021 |
| | | | | TW | 201900888 | A | 01 January 2019 |
| | | | | TW | I664296 | B | 01 July 2019 |
| | | | | WO | 2018-212327 | A1 | 22 November 2018 |
| JP | 07-188850 | A | 25 July 1995 | | None | | |
| JP | 11-350067 | A | 21 December 1999 | JP | 4084462 | B2 | 30 April 2008 |
| KR | 10-2020-0045906 | A | 06 May 2020 | KR | 10-2126971 | B1 | 25 June 2020 |
| CN | 109207840 | A | 15 January 2019 | CN | 109207840 | B | 22 December 2020 |
| | | | | EP | 3647453 | A1 | 06 May 2020 |
| | | | | US | 2020-0095650 | A1 | 26 March 2020 |
| | | | | WO | 2019-001250 | A1 | 03 January 2019 |

Form PCT/ISA/210 (patent family annex) (July 2019)

**EP 4 265 801 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 19950006006